# EUROPEAN PATENT SPECIFICATION

(11) **EP 3 360 449 B1**
(45) Date of publication and mention of the grant of the patent: **08.04.2020**
(21) Application number: 18000097.8
(22) Date of filing: 06.02.2018
(51) Int. Cl.: A47J 31/44

(54) **BEVERAGE MACHINE**
GETRÄNKEMASCHINE
MACHINE DE PRÉPARATION DE BOISSONS

(30) Priority: 09.02.2017 IT 201700014508
(43) Date of publication of application: 15.08.2018
(73) Proprietor: BARDAZZI, Bruno, 50059 Vinci FI (IT)
(72) Inventor: BARDAZZI, Bruno, 50059 Vinci FI (IT)
(74) Representative: Leucci, Lidia

(56) References cited:
- WO-A2-2013/128323
- CN-U- 201 612 511
- US-A1- 2006 266 223
- US-A1- 2014 021 227

## Description

The present invention relates to the household appliances, and particularly it relates to a machine for the preparation of beverages. Such machines are known for example from US2006/0266223 or WO2013/128323.

The machine in question is preferably designed to provide the user with a versatile, economical and small-scale apparatus, which is able to provide beverages of various types, preferably but not necessarily hot, made by infusion or dissolution of a substance contained in a removable filter holder, in the form of bulk as well as in the form of a prepacked charge.

A machine that has this kind of versatility cannot currently be small, since at least it must adapt to the use of more capacious containers (the so-called "mugs"), as well as that of espresso cups. In many machines, a very large positioning space is now provided for the container for the beverage, which is then divided by means of an oscillating shelf, which can be locked in the open position, so as to define a support position for the container nearest the dispensing nozzle, and therefore more suitable for smaller containers. Naturally, this type of support of a temporary nature, if it is well suited to plastic cups or "disposable" material, is not as reliable for the ceramic cups, which are normally quite heavy.

The particular construction of the removable filter holder allows a wide range of possible uses; moreover, the coupling movement between the pressure water supply unit is designed in such a way as to contribute to the overall saving of space in the construction of the present machine.

The aim of the present invention is therefore to provide a beverage preparation machine which is extremely versatile in its own applications, and which is both small in size and simple and economical to produce.

An object of the present invention is therefore a machine for preparing beverages, comprising a water tank, a box-like body housing a boiler, a pump and control and command means, and a beverage dispensing assembly located in the head of the said box body; said machine being provided frontally with a compartment for positioning a collection container for the prepared beverage, said compartment being comprised between a base platform, two side walls, a rear wall, and a ceiling wall, comprising the beverage dispensing assembly, in turn comprising pressure water supply means and removable filter-holder means, wherein said beverage dispensing assembly is mounted movable with respect to the base platform of said cavity and may be arranged in a position closer and further away from said platform, suitable guide and locking means being provided, thus allowing a substantial increase in volume to said compartment.

In an embodiment, said locking means are located along the side walls of the box-like body, and are controlled by actuating means arranged in the same way on the side walls; alternatively, the actuating means can be positioned on the upper wall of the box-like body. According to the invention the guide means comprise substantial portions of the side walls of the machine provided telescopically sliding inside one another.

A further object of the present invention is a beverage preparation machine comprising pressurized water supply means, and removable filter-holder means for introducing the substance to be infused or dissolved, wherein the coupling between said supply means and said filter-holder means is conducted by shifting, with a suitable kinematic mechanism, typically a snap mechanism, the unit for feeding hot water under pressure from a position of non-coupling to a coupling position, and vice versa. Moreover, in an embodiment, the boiler is arranged in the movable portion of said machine.

The machine may also be provided with a plurality of interchangeable filter holders, capable of accommodating both prepacked charges and filter means as containers for loose substances.

Further advantages and features of the machine according to the present invention will become apparent from the following detailed description of some embodiments thereof, performed, by way of non-limiting example, with reference to the attached drawings, in which:
Figure 1 is a perspective view of an embodiment of the machine according to the present invention, in a first configuration;
Figure 2 shows the machine of Figure 1 in a second configuration;
Figure 3 is a longitudinal section view of the machine of Figure 1;
Figure 4 is a perspective view of a second embodiment of the machine according to the invention, in a first configuration;
Figure 5 shows the machine of Figure 4 in a second configuration;
Figure 6 is a longitudinal section view of the machine of Figure 4;
Figure 7 is a perspective view of a variant embodiment of the machine illustrated in Figures 4 and 5;
Figure 8 is a longitudinal sectional view of a detail concerning a further embodiment of the machine according to the present invention.

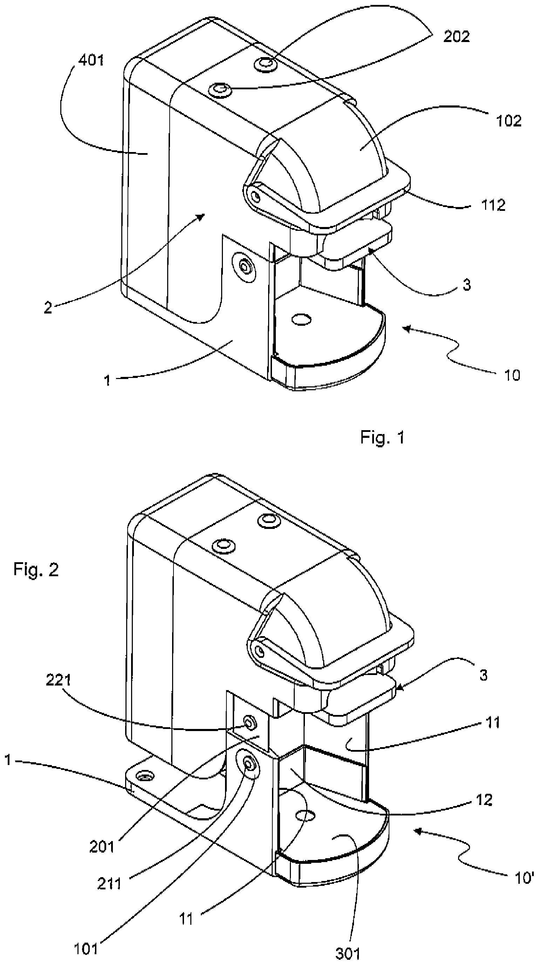

Figure 1 is a perspective view of the machine according to the present invention; the machine comprises a base support frame 1 and a box-like body 2 for containing the components of the machine, provided with a water tank 401, and a compartment 10 in which it is possible to position the container for collecting the beverage that will be prepared. with the said machine. The head 102 of the box-like body 2 contains the beverage dispensing assembly, which comprises the pressurized water supply means, not shown in the figure and better described below, and the removable filter-holder means 3, in which the dose of edible material, typically in powder form, which will be infused or dissolved by pressurized water, hot or at room temperature. The lever 112, as will become better to follow, allows the temporary coupling between the feeding means and the filter-holder means, while on the upper portion of the frame the pushbuttons 202 are visible, which allow the command and control of the machine.

In figure 2 the machine has a front compartment 10 ', used to receive the container for collecting the beverage produced, with a significantly increased volume compared to the compartment 10 shown in figure 1. This increase in volume of the compartment 10' is the result of the displacement upwardly of the ceiling wall of said compartment, which comprises the dispensing assembly of the machine, and in particular the filter-holder means 3. The other walls comprising the compartment 10 or 10 'are the side walls 11, the back wall 12 and the base platform 301. The upward displacement has been possible thanks to the flaps 201 which slide into the wall 101 of the base frame 1. The locking means 211 and 221 respectively allow to position the machine in such a way as to form the space 10 'or 10, i.e. to accommodate larger, or smaller, cups inside. The whole box-like body 2, including the tank 401, is lifted integrally to the head 102, which contains the dispensing assembly.

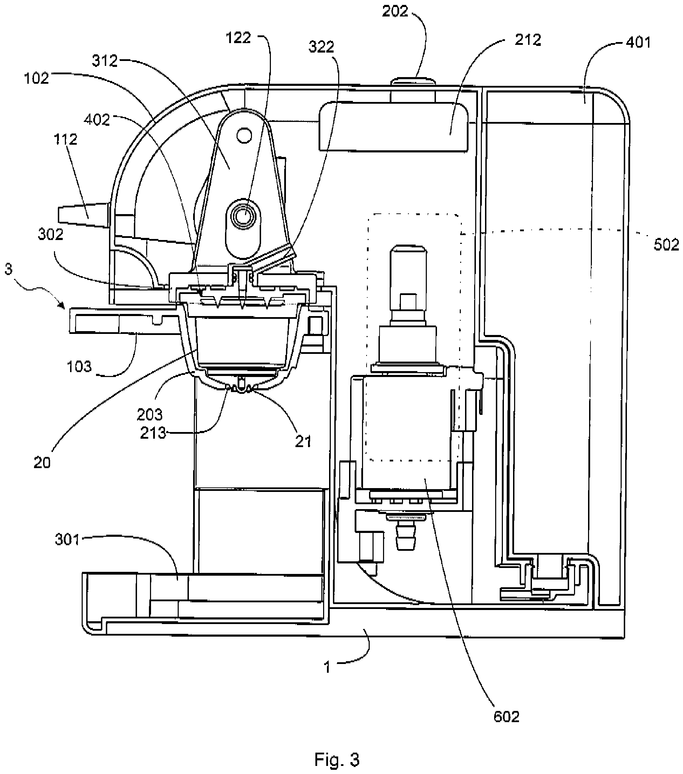

The section of Figure 3 illustrates the coupling mechanism of the supply means 302 with the filter-holder means 3, which comprises the lever 112 coupled by the pin 122 to the arm 312. The supply means 302 comprise the shower 402 which pours the pressurized water , coming from the conduit 322, inside the prepacked charge 20, provided with a delivery nozzle 21. The filter holder 3 comprises a handle 103 and a containment chamber 203, provided with an opening 213 in the center of its bottom. The machine further comprises an electronic circuitry 212 on which the pushbuttons 202 act and which allows to manage both the pump 602 connected to the tank 401 and the boiler 502, drawn by stroke and point in the figure.

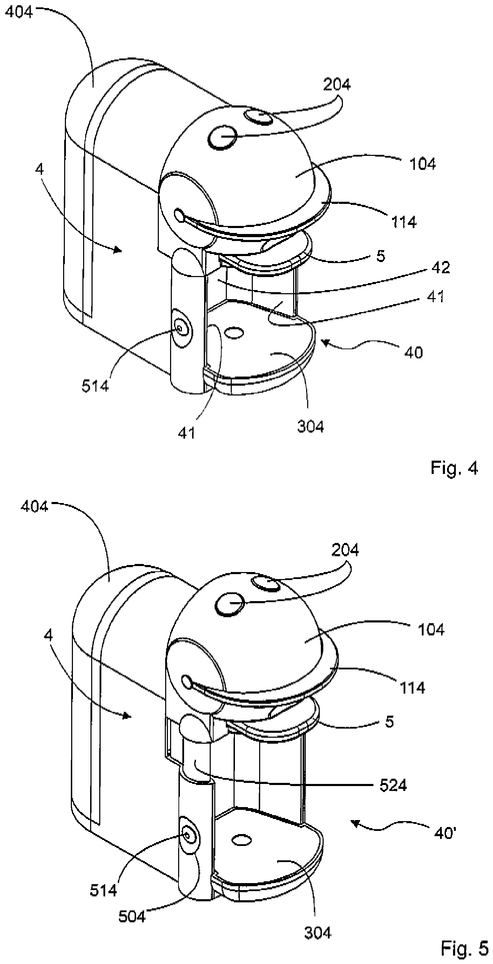

Figure 4 illustrates a second embodiment of the machine according to the present invention. The machine comprises a tank 404 coupled to a box-like body 4 for containing the components of the machine, which comprises a head 104 which in turn comprises the dispensing assembly, consisting of the pressurized water supply means and the filter-holder means 5; on the head 104 are the command and control buttons 204 of the machine. At the front the machine is equipped with a compartment 40 for receiving the means for collecting the prepared beverage; the compartment is formed by the side walls 41, the bottom wall 42, the ceiling wall constituted by the filter-holder means 5 and by the base platform 304.

In the configuration shown in Figure 5, in which to the equal parts correspond equal numerals, the head 104 of the machine is raised with respect to the platform 304, thanks to the fact that the flaps 524 are provided which slide telescopically into the lateral uprights 504 of the frame 4. the locking means 514 to allow positioning of the head 104 in one of the two configurations shown respectively in Figure 4 or 5. The compartment 40 'is clearly provided with a larger volume than the space 40, and is therefore able to accommodate bigger cups. The rest of the machine body remained integral with the base platform 304.

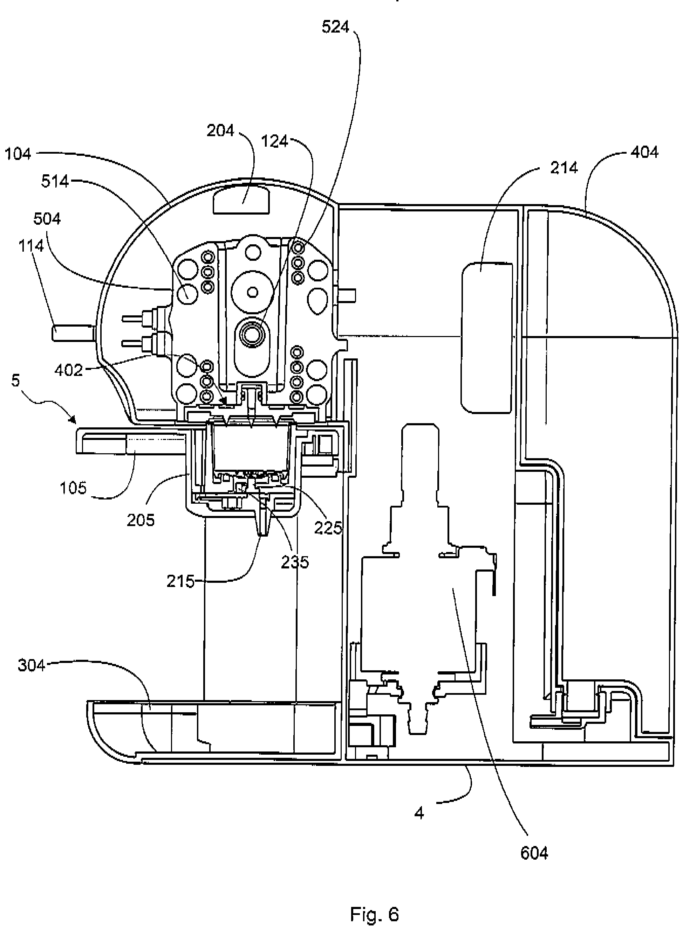

The section of Figure 6 shows the positioning of the boiler 504, equipped with the water pipe 514 and the resistances 524, inside the head 104, and its direct coupling with the lever 114 through the pin 124; the feeding shower is the one indicated with 402 in figures 3, and already described above. The filter-holder 5 comprises a handle 105, a containment chamber 205 in which a prepacked charge is inserted, which is also perforated in its bottom wall by means of the tip 225; the flow of fluid follows the conduit 235. This system of perforation of the prepacked charge is known from the European patent 1723047, of which the applicant is the inventor. In addition to the tank 404, the machine comprises the pump 604, which is connected, as well as the boiler 504, to the control electronics 214, controlled by the buttons 204.

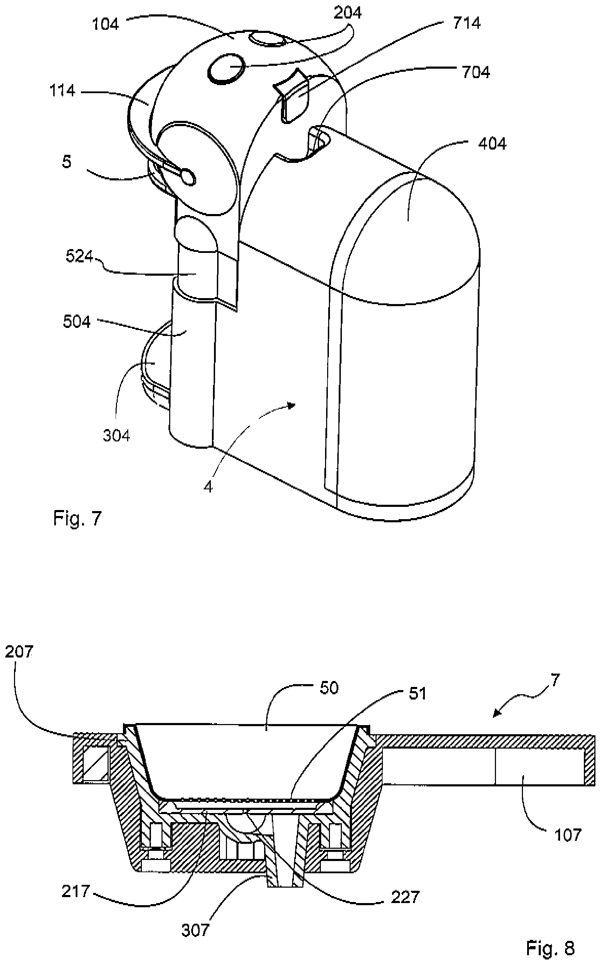

Figure 7 illustrates an executive variant of the machine illustrated in Figures 4 and 5; to the equal parts correspond equal numerals. In the figure it can be seen that the actuating means 714 for moving the head 104 with respect to the base platform 304 are arranged in the rear wall of the head itself. The box-like body is provided, in this variant, with a cavity 704, which makes such actuating means 714 accessible when the machine is in its configuration corresponding to that shown in Figure 4.

Finally, Figure 8 illustrates the filter holder 7, in which a basket 50 can be used for introducing loose coffee powder into the filter holder 7. The basket 50 is preferably made of metallic material and provided on the bottom wall of the micro-holes 51 , which allow the percolation of the infusion but not the passage of dust. The filter holder comprises a handle 107, a cavity 207 for housing the basket provided on the bottom of a membrane of elastomeric material 217 axially provided with a hole 227, which allows the passage of the infusion towards the delivery conduit 307. The membrane has the function of promoting the formation of coffee cream, as it results from Italian patent No. 1314511 of the same applicant.

In this way the machine is thus able to house different types of collection containers in the compartment intended for them, and is also suitable for operating with different filter-holder means used to make the various types of drinks. Moreover, a machine of this type is extremely compact, and in its closed configuration considerably reduces the space required for storage and shipping.

## Claims

1. A machine for preparing beverages, comprising a water tank (401; 404), a box-like body (1, 2; 4) which houses a boiler (502; 504), a pump (602; 604) and control means (212; 214), and a beverage dispensing unit placed in the head (102; 104) of said box-like body (1, 2; 4), said machine being fitted frontally with a compartment (10; 40) for the placement of a collection container for the prepared drink, said compartment (10; 40) being comprised between a base platform (301; 304), two side walls (11; 41), a rear wall (12; 42), and a ceiling wall, comprising the dispensing unit of the drink, in turn comprising supply means (402) of water under pressure and removable filter holder means (3; 5; 7), wherein said group of beverage dispensing is mounted movable relative to the base platform of said cavity and can be disposed in a position closer and in a more distant position with respect to said platform, there being provided suitable guide means (101, 201; 504 ; 524) and the locking means (211, 221; 514), being allowed in this manner to said chamber (10; 40) a substantial increase in volume (10'; 40'), **characterised in that** the guide means comprise substantial portions of the side walls (101, 201; 504; 524) of the said box-like body (1.2; 4) of the machine, provided telescopically sliding inside one another.

2. Machine according to claim 1, wherein said locking means (211, 221; 514) are placed along the side walls (101; 501), and are controlled through actuating means arranged likewise on said side walls.

3. Machine according to claim 1, wherein said actuating means (714) of said locking means are arranged on the upper wall of said box-like body (4), close to said head (104).

4. Machine according to any of the preceding claims 1 to 3, wherein said head (104) is movable relative to the rest of said box-like body (4).

5. Machine according to any of the preceding claims 1 to 4, provided with a plurality of filter holders (3; 5; 7) interchangeable between them, able to accommodate both prepackaged charges and filter means as containers for bulk substances.

## Patentansprüche

1. Getränkezubereitungsmaschine, umfassend einen Wassertank (401; 404), einen kastenartigen Körper (1, 2; 4), der einen Boiler (502; 504), eine Pumpe (602; 604) und eine Steuerung (212 214) aufnimmt, und eine Getränkeabgabeeinheit, die in dem Kopf (102; 104) des kastenartigen Körpers (1, 2; 4) angeordnet ist, wobei die Maschine mit einem vorderen Fach (10; 40) zum Aufbewahren eines Behälters zum Sammeln des zubereitetes Getränk ausgestattet ist, wobei das Fach (10; 40) zwischen einer Basisplattform (301; 304), zwei Seitenwänden (11; 41), einer Rückwand (12; 42) und einer Deckenwand angeordnet ist, die die Ausgabeeinheit aus umfasst das Getränk, das seinerseits Druckwasserversorgungsmittel (402) und entfernbare Filterhaltemittel (3; 5; 7) aufweist, wobei die Getränkeausgabegruppe relativ zur Basisplattform des Fachs beweglich angebracht ist und in einer Position näher und in einer weiter entfernten Position in Bezug auf die Plattform angeordnet werden kann, wobei geeignete Führungsmittel (101, 201; 504; 524) und die Verriegelungsmittel (211, 221; 514), auf diese Weise das Fach (10; 40) eine wesentliche Volumenzunahme (10 '; 40') ermöglicht wird,, **dadurch gekennzeichnet, dass** die Führungsmittel wesentliche Teile davon umfassen die Seitenwände (101, 201; 504; 524) des kastenartigen Körpers (1.2; 4) der Maschine sind teleskopartig ineinander verschiebbar vorgesehen.

2. Maschine nach Anspruch 1, wobei die Verriegelungsmittel (211, 221; 514) entlang der Seitenwände (101; 501) angeordnet sind und durch Betätigungsmittel gesteuert werden, die ebenfalls an den Seitenwänden angeordnet sind.

3. Maschine nach Anspruch 1, wobei die Betätigungsmittel (714) der Verriegelungsmittel an der oberen Wand des kastenartigen Körpers (4) nahe dem Kopf (104) angeordnet sind.

4. Maschine nach einem der vorhergehenden Ansprüche 1 bis 3, wobei der Kopf (104) relativ zum Rest des kastenartigen Körpers (4) bewegbar ist.

5. Maschine nach einem der vorhergehenden Ansprüche 1 bis 4, die mit mehreren austauschbaren Filterhaltern (3; 5; 7) versehen ist, die sowohl vorverpackte Chargen als auch Filtermittel als Behälter für Schüttgüter aufnehmen können.

## Revendications

1. Machine pour préparer des boissons, comprenant un réservoir d'eau (401; 404), un corps en forme de boîte (1, 2; 4) qui abrite une chaudière (502; 504), une pompe (602; 604) et des moyens de commande (212 ; 214) et une unité de distribution de boisson placée dans la tête (102; 104) dudit corps en forme de boîte (1, 2; 4), ladite machine étant équipée à l'avant d'un compartiment (10; 40) pour la mise en place d'un Récipient collecteur pour la boisson préparée, ledit compartiment (10; 40) étant compris entre une plate-forme de base (301; 304), deux parois latérales (11; 41), une paroi arrière (12; 42) et une paroi de plafond, comprenant l'unité de distribution de la boisson comprenant à son tour un moyen d'alimentation (402) del l'eau sous pression et un moyen de support de filtre amovible (3; 5; 7), dans lequel ledit groupe de distribution de boisson est monté mobile par rapport à la plate-forme de base de ladite cavité et peut être disposé dans une position plus proche et dans une position plus éloignée par rapport à ladite plate-forme, des moyens de guidage appropriés étant prévus (101, 201; 504; 524) aussi que les moyens de verrouillage (211, 221; 514), permettant ainsi à ladite chambre (10; 40) une augmentation substantielle de volume (10 '; 40'), **caractérisés en ce que** les moyens de guidage comprennent des portions importantes de les parois latérales (101, 201; 504; 524) dudit corps en forme de boîte (1.2; 4) de la machine, prévues coulissant de manière télescopique l'une dans l'autre.

2. Machine selon la revendication 1, dans laquelle lesdits moyens de verrouillage (211, 221; 514) sont placés le long des parois latérales (101; 501) et sont commandés par des moyens d'actionnement agencés de la même manière sur lesdites parois latérales.

3. Machine selon la revendication 1, dans laquelle ledit moyen d'actionnement (714) dudit moyen de verrouillage est agencé sur la paroi supérieure dudit corps en forme de boîte (4), à proximité de ladite tête (104).

4. Machine selon l'une quelconque des revendications précédentes 1 à 3, dans laquelle ladite tête (104) est mobile par rapport au reste dudit corps en forme de boîte (4).

5. Machine selon l'une quelconque des revendications précédentes 1 à 4, munie d'une pluralité de porte-filtres (3; 5; 7) interchangeables entre eux, pouvant recevoir à la fois des charges préemballées et des moyens de filtrage en tant que conteneurs pour produits en vrac.
